# EUROPÄISCHE PATENTSCHRIFT

(11) **EP 1 961 307 B1**
(45) Veröffentlichungstag und Bekanntmachung des Hinweises auf die Patenterteilung: **09.02.2011**
(21) Anmeldenummer: 08003163.6
(22) Anmeldetag: 25.02.2008
(51) Int. Cl.: A22C 11/02, A22C 13/02

(54) **Separatoren für die Herstellung von Würsten und Verfahren zur Detektion von derartigen Separatoren in Würsten**
Separators for the fabrication of sausages and process for the detection of such separators in sausages.
Séparateurs pour la fabrication de saucisses et procédé pour la détection de tels séparateurs dans des saucisses

(30) Priorität: 25.02.2007 DE 202007002850 U; 07.03.2007 DE 202007003410 U
(43) Veröffentlichungstag der Anmeldung: 27.08.2008
(73) Patentinhaber: CDS Hackner GmbH, 74564 Crailsheim (DE)
(72) Erfinder: Hackner, Michael, 74564 Crailsheim (DE)
(74) Vertreter: Mierswa, Klaus

(56) Entgegenhaltungen:
- GB-A- 1 043 435
- US-A- 3 826 852
- US-A- 4 641 687
- US-A- 4 688 298
- US-A- 5 027 863

## Beschreibung

### Technisches Gebiet:

Die Erfindung betrifft Separatoren für auf einen aus einer Folie bestehenden Träger aufgeraffte Wursthüllenabschnitte für die Herstellung von Würsten, wobei jeder Separator zwei auf dem Träger benachbarte Wursthüllenabschnitte voneinander trennt und der einzelne Separator aus einer gelochten Scheibe besteht, wobei die Separatoren einen metallischen Stoff aufweisen, gemäß dem Oberbegriff des Anspruchs 1; ebenso betrifft die Erfindung Stopper für auf einen aus einem Röhrchen bestehenden Träger aufgeraffte Wursthüllenabschnitte für die Herstellung von Würsten, wobei auf beide Enden des Röhrchens ein Stopper aufgesetzt ist, gemäß Anspruch 2.

### Stand der Technik:

Naturdärme von Schwein und Schaf werden nach Kundenwunsch auf Naturdarmträger vorkonfektioniert. Diese Träger können Folien, Softtubes, oder Röhrchen, Hardpipes, sein. Dabei hat jeder Kunde individuelle Anforderungen und Wünsche, welche vom Lieferanten in Bezug auf die mit Wursthüllen beladenen Träger berücksichtigt werden müssen. Dadurch entstehen bei den mit Wursthüllen beladenen Trägern verschiedene Untervarianten, wie überlappte Därme, geschweißte Därme oder gestoßene Därme, welche auf den jeweiligen Trägern angeordnet sind.

Bei der gestoßenen Variante werden mehrere Darmstücke hintereinander auf einen Träger aufgerafft. Der Nachteil dabei ist, dass der Anwender der Träger an der Wurstfüllmaschine später den Anfang und das Ende des jeweiligen Darmabschnittes nicht mehr sehen kann. Damit die einzelnen Darmabschnitte voneinander unterschieden werden können, werden vom Hersteller der Träger zwischen die Darmabschnitte bzw. Wursthüllenabschnitte Separatoren aus Kunststoff gesetzt.

Des Weiteren werden bei der Verwendung von Röhrchen, Hardpipes, außerdem auf beide Enden des Röhrchens Stopper aufgesetzt, welche vorzugsweise aus Gummi bestehen und welche ein unbeabsichtigtes Herunterrutschen der Darmabschnitte verhindern sollen.

Sowohl die Separatoren als auch die Stopper bergen das Risiko, bei der Herstellung von Würsten auf dem Wursttisch ins Fleischbrät zu geraten und somit später eventuell unbeabsichtigt mit abgefüllt zu werden. In diesem Fall fände der Konsument in seiner Wurst einen solchen Gummistopper oder Separator. Die Verwender von derartigen Trägern wünschen daher eine Lösung des Problems, bzw. eine Möglichkeit, das Risiko des Verbleibs eines Separators und/oder eines Stoppers in der fertigen Wurst besser beherrschbar zu machen.

Durch die US-A-5 027 863 ist eine Vorrichtung und ein Verfahren zur Herstellung von Nahrungsmittelfüllungen in Lebensmittelbehältern bekannt geworden, um ein Produkt, wie Bologna-Würste, zu erzeugen, die in fertigem Zustand wenigstens ein flaches Ende aufweisen, wobei auch beide Enden flach sein können. Die Lebensmittelbehälter bestehen je aus einem länglichen Folienschlauch aus dünner, dehnbarer Plastik, zum Beispiel aus einem Polyethylenfilm. Der Folienschlauch, der in ungedehntem Zustand vor seiner Befüllung gerafft auf ein Füllrohr aufgeschoben ist, ist durch peripher umlaufende Sollbruchstellen, wie Perforationen, in Abschnitte von äquidistanten Abständen aufgeteilt. An jedem Ende eines Abschnitts und benachbart einer Sollbruchstelle befindet sich auf dem Folienschlauch wenigstens eine Scheibe, die mittels eines zentralen Loches auf den Folienschlauch und somit auf das Füllrohr aufgeschoben ist. Beim Befüllen des betreffenden Abschnitts mit Füllung wird die Scheibe vom Füllrohr abgeschoben und in das Ende des mittels eines Clips verschlossenen Folienschlauchabschnitts gedrückt, dergestalt, dass die Scheibe endständig in einer Querschnittsebene der Wurst sich befindet. Auf diese Weise wird zum besseren Verpacken des fertigen Produkts das Ende der Wurst, anstatt abgerundet gestaltet zu sein, durch die Scheibe flach gedrückt. Die Scheibe besteht aus einem Material, wie Aluminium, Stahl oder Plastik, und besitzt eine genügende Steifheit, um dem inneren Druck, der bei der Befüllung des betreffenden Abschnitts mit der Füllung entsteht, entgegen einer Verformung zu widerstehen. Um das fertige Produkt an beiden Enden flach zu gestalten kann eine derartige Scheibe an beiden Enden des betreffenden Abschnitts innerhalb der Füllung vorgesehen sein.

Durch die US-A-4 641 687 ist eine sehr ähnliche Vorrichtung und ein sehr ähnliches Verfahren zur Herstellung von Würsten wie durch die vorbeschriebene US-A-5 027 863 bekannt geworden. Auch hier erstrecken sich bei der fertigen Wurst innerhalb des Folienschlauches an deren beiden Enden je eine Scheibe endständig in der Wurst vorhanden ist sich die Scheiben in einer Querschnittsebene, um die Enden flach zu gestalten.

### Technische Aufgabe:

Der Erfindung liegt deshalb die Aufgabe zugrunde, Separatoren als auch Stopper zu schaffen, welche, falls sie unbeabsichtigt ins Fleischbrät bei der Wurstherstellung gelangen sollten, aufgefunden und damit aussortiert werden können.

### Offenbarung der Erfindung und deren Vorteile:

Zur Lösung der Aufgabe dienen Separatoren gemäß der eingangs genannten Gattung, die erfindungsgemäß dadurch gekennzeichnet sind, dass der metallische Stoff aus metallischen, ferromagnetischen Partikeln aus Metallstaub oder aus Metallkömem und der einzelne Separator aus Kunststoff oder aus Gummi besteht, in welchen die metallischen Partikel eingebettet und umschlossen sind, wodurch die Separatoren beim Vorbeilauf der Würste an einem Metalldetektor mittels dieses Metalldetektors detektierbar sind.

Des Weiteren dienen zur Lösung der Aufgabe auch Stopper der eingangs genannten Gattung, die erfindungsgemäß dadurch gekennzeichnet sind, dass die Stopper einen metallischen Stoff aufweisen, der aus metallischen, ferromagnetischen Partikeln aus Metallstaub oder aus Metallkörnern besteht, und die Stopper aus Kunststoff oder aus Gummi bestehen, in welchen die metallischen Partikel eingebettet und umschlossen sind, wodurch die Stopper beim Vorbeilauf der Würste an einem Metalldetektor mittels dieses Metalldetektors detektierbar sind. Es dienen somit Separatoren und/oder Stopper für auf einen entweder aus einer Folie oder einem Röhrchen bestehenden Träger aufgeraffte Wursthüllenabschnitte zur Herstellung von Würsten, wobei jeder Separator zwei auf dem Träger benachbarte Wursthüllenabschnitte voneinander trennt und beim Einsatz von Röhrchen als Träger auf beide Enden desselben ein Stopper aufgesetzt ist, und der einzelne Separator aus einer gelochten Scheibe besteht, wobei sowohl die Separatoren als auch die Stopper einen metallischen Stoff aufweisen, wodurch die Separatoren als auch die Stopper mittels eines Metalldetektors detektierbar sind.

In vorteilhafter Weise durchlaufen aus Sicherheitsgründen nach dem Herstellen alle Würste, vor oder nach der Verpackung, einen Metalldetektor. Durch das erfindungsgemäße Einbringen eines metallischen Stoffes oder metallischer Partikel, wie Metallstückchen oder Metallpulver, in die Separatoren und/oder in die Stopper können diese, falls ein solcher Separator und/oder Stopper in die Wurst geraten sein sollte, durch den Metalldetektor erkannt werden, so dass diese Wurst aussortiert werden kann. Somit ist in vorteilhafter Weise das Risiko des Verbleibens eines Separators und/oder eines Stoppers in der verkaufsfertigen Wurst minimiert, bzw. bei entsprechender Einstellung und Güte des Metalldetektors ausgeschlossen.

Erfindungsgemäß ist der metallische Stoff wenigstens ein metallischer Partikel, welcher in den Separatoren als auch in den Stoppern angeordnet oder inkorporiert ist. Der oder die metallischen Partikel bestehen aus Metallstaub und sind ferromagnetisch. Auf diese Weise können derartig unbeabsichtigt in das Fleischbrät gelangte Separatoren und/oder Stopper nach dem Herstellen von Würsten aus den Wursthüllenabschnitten leicht und ohne großen elektrischen Aufwand mittels eines Metalldetektors erkannt werden. Es ist auch denkbar, dass der Stopper vollständig aus einem nichtrostenden, mittels eines Metalldetektors detektierbaren metallischen Stoff besteht.

Erfindungsgemäß besteht die einzelne Scheibe und/oder der Stopper aus einem Kunststoff oder aus Gummi, in welchen die metallischen Partikel eingebettet und umschlossen sind. Dabei können vorteilhaft die metallischen Partikel innerhalb der Separatoren und/oder Stopper durch Metallstückchen oder -kömer gebildet sein.

Träger für die Herstellung von Würsten, bestehen entweder aus einer Folie oder aus einem Röhrchen, wobei die auf den Träger aufgerafften Wursthüllenabschnitte mittels Separatoren voneinander getrennt sind. Bei der Verwendung von Röhrchen als Träger mit darauf befindlichen mehreren Wursthüllen sind die Röhrchen an ihren Enden mittels Stopper verschlossen, welche ein Abgleiten der Wursthüllen verhindern. Sowohl in den Separatoren als auch in den Stoppern ist ein mittels eines Metalldetektors-detektierbarer metallischer Stoff angeordnet, der aus metallischen Partikeln aus Metallstaub oder aus Metallkörnern besteht, welche ferromagnetisch sind, wodurch die Separatoren oder die Stopper beim Vorbeilauf der Würste an dem Metalldetektor mittels desselben detektierbar sind.

Vorteilhafter Weise sind die auf den Trägern aufgerafften Wursthüllen Naturdarmabschnitte.

Zum anderen betrifft die Erfindung ein Verfahren zur Herstellung von Würsten, nämlich ein Verfahren zur Detektion von Separatoren und/oder Stopper, welche bei der Herstellung von Würsten unbeabsichtigt in soeben hergestellte Würste geraten sind, unter Verwendung von Separatoren und/oder Stopper für auf einen entweder aus einer Folie oder einem Röhrchen bestehenden Träger aufgeraffte Wursthüllenabschnitte für die Herstellung der Würste, wobei jeder Separator zwei auf dem Träger benachbarte Wursthüllenabschnitte voneinander trennt und beim Einsatz von Röhrchen als Träger auf beide Enden desselben ein Stopper aufgesetzt wird, und der einzelne Separator aus einer gelochten Scheibe besteht, wobei sowohl die Separatoren als auch die Stopper einen metallischen Stoff aufweisen, wobei nach der Fertigstellung der Würste dieselben an einem Metalldetektor vorbeigeführt werden, und der Metalldetektor in die Wurst geratene Separatoren als auch Stopper detektiert.

Zur Herstellung von Würsten werden somit verfahrensmäßig die Separatoren und/oder Stopper, welche im Zusammenhang mit Trägern aus einer Folie oder aus einem Röhrchen auf denselben angeordnet werden, mit einem mittels eines Metalldetektors detektierbaren metallischen Stoff versehen, wobei die Würste nach ihrer Herstellung einen Metalldetektor durchlaufen oder an diesem vorbeilaufen, welcher derart erfindungsgemäß markierte Separatoren und/oder Stopper in einer Wurst detektiert und durch ein Signal anzeigt, falls ein derartiger Stopper oder Separator bei der Herstellung der Wurst unbeabsichtigt in diese geraten sein sollte. Eine dergestalt angezeigte Wurst kann dann sofort aus dem Produktionsprozess herausgenommen werden.

Zwei Beispiele der Erfindung sind in der Zeichnung dargestellt und anschließend beschrieben. Dabei zeigen:
- Figur 1: eine Ansicht eines Trägers in Form einer Folie, auf welcher zwei Natur- darmabschnitte aufgerafft sind, welche durch einen scheibenförmigen erfindungsgemäßen Separator voneinander getrennt sind,
- Figur 2: einen scheibenförmigen Separator und
- Figur 3: eine Ansicht eines Trägers in Form eines Röhrchens, auf welchem drei durch zwei erfindungsgemäße Separatoren getrennte Naturdarmab- schnitte aufgerafft sind, wobei die Enden des Röhrchens durch je einen erfindungsgemäßen Stopper verschlossen sind.

### Wege zur Ausführung der Erfindung:

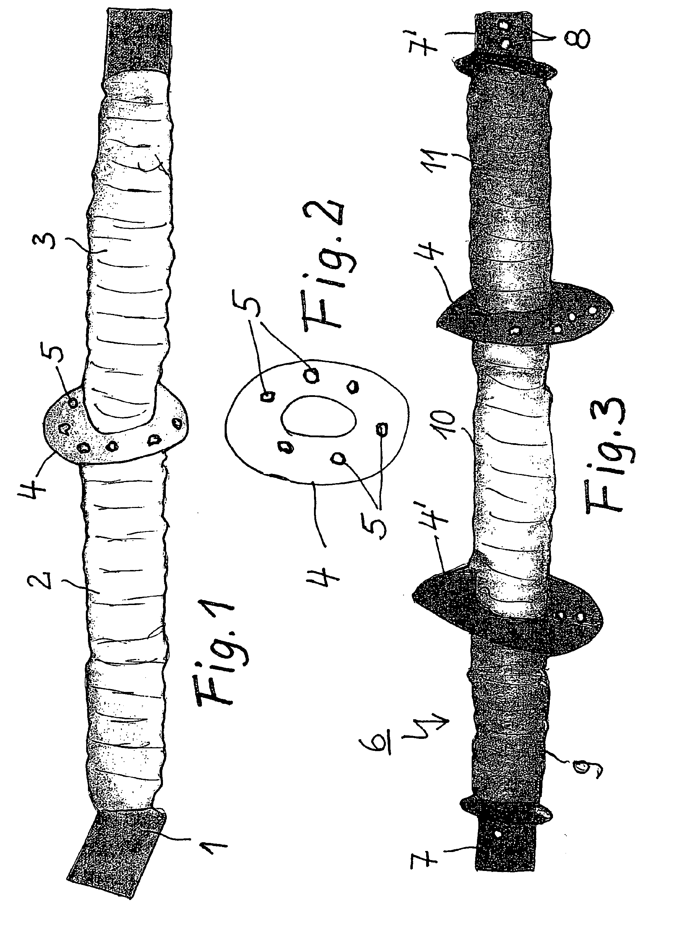

Gemäß der Figur ist dort eine Ansicht eines Trägers 1 in Form einer Folie abgebildet, auf welcher zwei Naturdarmabschnitte 2 und 3 aufgerafft sind, welche durch einen scheibenförmigen, gelochten, erfindungsgemäßen Separator 4 voneinander getrennt sind. Der Separator 4, der nochmals allein in Figur 2 gezeigt ist und der bevorzugt aus einem Kunststoffplättchen besteht, ist eine Ringscheibe und zentrisch gelocht und weist in das Kunststoffmaterial eingebettete metallische Partikel 5 bzw. einen metallischen Stoff auf. Die metallischen Partikel 5 bestehen aus einem durch einen Metalldetektor detektierbaren metallischen Stoff, welcher beispielsweise ferromagnetisch ist. Die metallischen Partikel 5 können als Metallpulver oder -kömer in das Kunststoffmaterial des Separators eingebettet sein. Ebenso können die Separatoren und/Träger mittels einer metallischen Beschichtung wenigstens teilweise beschichtet sein, wobei diese Beschichtung lebensmittelneutral ist.

In einer weiteren Variante kann die einzelne gelochte Scheibe und/oder oder der Stopper vollständig aus einem nichtrostenden, metallischen Stoff bestehen, wobei dieser metallische Stoff lebensmittelneutral ist. Die gelochte Scheibe ist vorzugsweise eine Ringscheibe.

Gemäß der Figur 3 ist dort eine Ansicht eines Trägers in Form eines Röhrchens 6 abgebildet, auf welchem drei durch zwei erfindungsgemäße Separatoren 4, 4' getrennte Naturdarmabschnitte 9, 10 und 11 aufgerafft sind, wobei die Enden des Röhrchens 6 durch je einen erfindungsgemäßen Stopper 7, 7' verschlossen sind. Die Stopper 7, 7' bestehen vorzugsweise aus Gummi oder einem Kunststoffmaterial. Gleichermaßen wie in den Separatoren 4 sind auch in den Stoppern 7, 7' Metallpartikel 8 angeordnet, die ebenfalls aus einem durch einen Metalldetektor detektierbaren metallischen Stoff bestehen, der beispielsweise ferromagnetisch ist. Die metallischen Partikel 8 können gleichermaßen als Metallpulver in das Kunststoff- oder Gummimaterial des Stoppers 7, 7' eingebettet sein.

Sobald die Darmabschnitte mit Fleischbrät gefüllt und zu Würsten verarbeitet sind durchlaufen die Würste eine Detektorstrecke, gebildet unter anderem aus einem Metalldetektor, welcher den in den Separatoren bzw. den Stoppern angeordneten metallischen Stoff bzw. die in den Separatoren und/oder Stoppern angeordneten Metallpartikel zu detektieren imstande ist. Der Metalldetektor sowie die hergestellten Würste sind in der Zeichnung nicht dargestellt. Stellt der Detektor in einer der Würste Metallpartikel fest, so gibt der Metalldetektor ein Signal ab, woraufhin diese Wurst entweder durch Personal oder auch automatisch aussortiert werden kann.

### Gewerbliche Verwertbarkeit.

Die Erfindung ist insbesondere bei der Herstellung von Würsten zu deren Überprüfung anwendbar.

## Patentansprüche

1. Separatoren (4,4') für auf einen aus einer Folie (1) bestehenden Träger (1,6) aufgeraffte Wursthüllenabschnitte (2,3,9,10,11) für die Herstellung von Würsten, wobei jeder Separator (4) zwei auf dem Träger (1,6) benachbarte Wursthüllenabschnitte (2,3,9,10,11) voneinander trennt und der einzelne Separator (4) aus einer gelochten Scheibe (4,4') besteht, wobei die Separatoren (4,4') einen metallischen Stoff aufweisen, **dadurch gekennzeichnet, dass** der metallische Stoff aus metallischen, ferromagnetischen Partikeln (5,8) aus Metallstaub oder aus Metallkörnern und der einzelne Separator (4,4') aus Kunststoff oder aus Gummi besteht, in welchen die metallischen Partikel (5,8) eingebettet und umschlossen sind, wodurch die Separatoren (4,4') beim Vorbeilauf der Würste an einem Metalldetektor mittels dieses Metalldetektors detektierbar sind.

2. Stopper (7,7') für auf einen aus einem Röhrchen (6) bestehenden Träger (1,6) aufgeraffte Wursthüllenabschnitte (2,3,9,10,11) für die Herstellung von Würsten, wobei auf beide Enden des Röhrchens ein Stopper (7,7') aufgesetzt ist, **dadurch gekennzeichnet, dass** die Stopper einen metallischen Stoff aufweisen, der aus metallischen, ferromagnetischen Partikeln (5,8) aus Metallstaub oder aus Metallkömem besteht, und die Stopper (7,7') aus Kunststoff oder aus Gummi bestehen, in welchen die metallischen Partikel (5,8) eingebettet und umschlossen sind, wodurch die Stopper (7,7') beim Vorbeilauf der Würste an einem Metalldetektor mittels dieses Metalldetektors detektierbar sind.

3. Separatoren (4,4') nach Anspruch 1, **dadurch gekennzeichnet, dass** die gelochten Scheiben Ringscheiben (4,4') sind.

4. Stopper nach Anspruch 2, **dadurch gekennzeichnet, dass** der einzelne Stopper (7,7') vollständig aus einem nichtrostenden, metallischen Stoff besteht.

5. Verfahren zur Detektion von Separatoren (4,4') und/oder Stopper (7,7'), welche bei der Herstellung von Würsten unbeabsichtigt in soeben hergestellte Würste geraten sind, **dadurch gekennzeichnet, dass** unter Verwendung von Separatoren (4,4') und/oder Stoppern (7,7') für auf einen entweder aus einer Folie (1) oder einem Röhrchen (6) bestehenden Träger (1,6) aufgeraffte Wursthüllenabschnitte (2,3,9,10,11) für die Herstellung der Würste, wobei jeder Separator (4) zwei auf dem Träger (1,6) benachbarte Wursthüllenabschnitte (2,3,9,10,11) voneinander trennt und beim Einsatz von Röhrchen (6) als Träger auf beide Enden desselben ein Stopper (7,7') aufgesetzt wird, und der einzelne Separator (4) aus einer gelochten Scheibe (4,4') besteht, wobei sowohl die Separatoren (4,4') als auch die Stopper (7,7') einen metallischen Stoff aufweisen, wobei nach der Fertigstellung der Würste dieselben an einem Metalldetektor vorbeigeführt werden, und der Metalldetektor in die Wurst geratene Separatoren (4,4') als auch Stopper (7,7') detektiert.

## Claims

1. Separators (4, 4') for sausage casing sections (2, 3, 9, 10, 11) that have been slipped onto a carrier (1, 6) consisting of a film (1), for the production of sausages, whereby each separator (4) separates two adjacent sausage casing sections (2, 3, 9, 10, 11) from each other that are on the carrier (1, 6), and the individual separator (4) consists of a perforated disk (4, 4'), whereby the separators (4, 4') contain a metallic material, **characterized in that** the metallic material consists of metallic, ferromagnetic particles (5, 8) of metal dust or metal grains, and the individual separator (4, 4') is made of plastic or rubber into which the metallic particles (5, 8) have been embedded and encapsulated, as a result of which the separators (4, 4') can be detected by a metal detector as the sausages move past said metal detector.

2. Stoppers (7, 7') for sausage casing sections (2, 3, 9, 10, 11) that have been slipped onto a carrier (1, 6) consisting of a tube (6), for the production of sausages, whereby a stopper (7, 7') is placed onto both ends of the tube, **characterized in that** the stoppers contain a metallic material consisting of metallic, ferromagnetic particles (5, 8) of metal dust or metal grains, and the stoppers (7, 7') are made of plastic or rubber into which the metallic particles (5, 8) have been embedded and encapsulated, as a result of which the stoppers (7, 7') can be detected by a metal detector as the sausages move past said metal detector.

3. The separators (4, 4') according to Claim 1 **characterized in that** the perforated disks are annular disks (4, 4').

4. The stoppers (7, 7') according to Claim 2, **characterized in that** the individual stoppers (7, 7') are made entirely of a stainless, metallic material.

5. A method for detecting separators (4, 4') and/or stoppers (7, 7') that, during the production of sausages, have inadvertently gotten into the sausages that have just been made, **characterized in that**, when separators (4, 4') and/or stoppers (7, 7') are used for sausage casing sections (2, 3, 9, 10, 11) that have been slipped onto a carrier (1, 6) consisting of either a film (1) or a tube (6), for the production of sausages, whereby each separator (4) separates two adjacent sausage casing sections (2, 3, 9, 10, 11) from each other that are on the carrier (1, 6), and when tubes (6) are used as carriers, a stopper (7, 7') is placed onto both ends of the tube, and the individual separator (4) consists of a perforated disk (4, 4'), whereby the separators (4, 4') as well as the stoppers (7, 7') contain a metallic material, whereby, after the sausages have been produced, they are moved past a metal detector, and the metal detector detects separators (4, 4') as well as stoppers (7, 7') that have gotten into the sausage.

## Revendications

1. Séparateurs (4,4') de tronçons de boyaux (2,3,9,10,11) drapés sur un support (1,6) consistant en une feuille (1) pour la fabrication de saucisses, chaque séparateur (4) séparant deux tronçons de boyau (2,3,9,10,11) contigus sur le support (1,6) et le séparateur individuel (4) consistant en un disque perforé (4,4'), lesdits séparateurs (4,4') présentant une matière métallique, **caractérisés en ce que** la matière métallique consiste en particules métalliques ferromagnétiques (5,8) de poussière métallique ou de grains métalliques et le séparateur individuel (4,4') en matière plastique ou en caoutchouc, dans lequel les particules métalliques (5,8) sont noyées et enrobées, de sorte que les séparateurs (4,4') peuvent être détectés lorsque les saucisses passent par-devant un détecteur de métaux.

2. Stoppeurs (7,7') pour tronçons de boyaux (2,3,9,10,11) drapés sur un support (1,6) consistant en un tube (6) pour la fabrication de saucisses, un stoppeur (7,7') étant disposé respectivement sur chacune des deux extrémités du tube, **caractérisés en ce que** les stoppeurs présentent une matière métallique consistant en particules métalliques ferromagnétiques (5,8) de poussière métallique ou de grains métalliques et les stoppeurs (7,7') consistant en matière plastique ou en caoutchouc, dans lequel les particules métalliques (5,8) sont noyées et enrobées, de sorte que les stoppeurs (7,7') peuvent être détectés lorsque les saucisses passent par-devant un détecteur de métaux.

3. Séparateurs (4,4') selon la revendication 1, **caractérisés en ce que** les disques perforés sont des disques annulaires (4,4').

4. Stoppeurs selon la revendication 2, **caractérisés en ce que** le stoppeur individuel (7,7') consiste entièrement en une matière métallique inoxydable.

5. Procédé pour la détection de séparateurs (4,4') et/ou de stoppeurs (7,7') qui, lors de la fabrication de saucisses, se trouvent pris de façon fortuite dans les saucisses venant d'être produites, **caractérisé en ce qu'**on utilise des séparateurs (4,4') et/ou de stoppeurs (7.7') pour les tronçons de boyau (2,3,9,10,11) drapés sur un support (1,6) consistant ou bien en une feuille (1) ou bien en un tube (6) pour la fabrication des saucisses, chaque séparateur (4) séparant deux tronçons de boyau (2,3,9,10,11) contigus sur le support (1,6), et, lorsqu'on utilise des tubes (6) en tant que support, un stoppeur (7,7') étant disposé sur chacune des deux extrémités dudit support et le séparateur individuel (4) consistant en un disque perforé (4,4'), aussi bien les séparateurs (4,4') que les stoppeurs (7,7') présentant une matière métallique et les saucisses venant d'être fabriquées passant par-devant un détecteur de métaux lequel détecte tant les séparateurs (4,4') que les stoppeurs (7,7') qui se trouvent pris de façon fortuite dans les saucisses.
